## Europäisches Patentamt
## European Patent Office
## Office européen des brevets

(19)

(11) Publication number: **0 111 915**
**A2**

(12) **EUROPEAN PATENT APPLICATION**

(21) Application number: **83112715.4**

(22) Date of filing: **16.12.83**

(51) Int. Cl.³: **G 09 B 5/02**
**G 03 B 21/132**

(30) Priority: **20.12.82 NO 824287**

(43) Date of publication of application:
**27.06.84 Bulletin 84/26**

(84) Designated Contracting States:
**AT BE CH DE FR GB IT LI LU NL SE**

(71) Applicant: **Elopak A/S**

**N-3430 Spikkestad(NO)**

(72) Inventor: **Johnsen, Johan A.**
**Ivers vei 5**
**N-3474 Aros(NO)**

(74) Representative: **Altenburg, Udo, Dipl.-Phys. et al,**
**Patent- und Rechtsanwälte**
**Bardehle-Pagenberg-Dost-Altenburg & Partner Postfach**
**86 06 20**
**D-8000 München 86(DE)**

(54) **Tuition table.**

(57) A tuition table for small groups of pupils and an instructor has a circular table top (1) carried by a central pedestal (4) in the form of an upended hollow drum. The table top (1) comprises a central display (2) on the top of the drum-shaped pedestal (4). The display (2) comprises a glass plate (6) which lends itself to writing with a suitable pen, and a subjacent cloth (7) forming a screen for a slide projector (8) provided inside the pedestal (4). The glass plate (6) and the cloth (7) are mounted in a carrier (9) which is rotatably mounted relatively to the pedestal (4) and the overhanging portion (3) of the table top, and which carries a frame (10, 11) for supporting the projector (8). The table top (1) reaches no further outside the pedestal (4) than to allow all persons around the table easily to reach the central display.

Fig.2.

Croydon Printing Company Ltd.

EP 0 111 915 A2

# Tuition Table

The invention relates to a tuition table for small groups of pupils and an instructor.

When instructing adults in for instance industrial companies, it turns out that tuition in a usual classroom situation with the instructor placed behind a desk and the pupils placed in rows at tables or desks, is not advisable. This is believed partly to be due to psychological effects, but can also be attributed to an excessive physical distance between the instructor and the pupils, especially the pupils at the rear of the classroom.

The object of the invention is to improve this disadvantageous situation and provide such a positioning of the persons involved that all pupils are placed on a par, and the instructor is incorporated into the group of pupils without having to renounce on the use of common teaching aids such as blackboard, projectors etc.

For this purpose the invention provides a tuition table which is characterized in that a central pedestal in the form of an upended drum carries a table top having a central display on the top of the drum-shaped pedestal, the table top reaching no further outside the pedestal than to allow all persons around the table easily to reach the central display. It will be understood that such a tuition table is only suited for small groups of pupils of up to 6 to 8 persons in addition to the instructor. The table top can preferably be circular or approximately circular, for instance polygonal.

The drum-shaped pedestal can be enlarged at its base to provide a foot rest surrounding the pedestal. Even the pedestal can be circular or polygonal.

The display preferably comprises a glass plate which lends itself to writing with a suitable pen, and a subjacent cloth forming a screen for a slide projector provided inside the pedestal. The glass plate and the cloth may be mounted in a carrier ring which is rotatably mounted relatively to the pedestal and the rest of the table top, and which carries a frame for supporting the projector, so that the picture projected on the glass plate can be rotated. The projector preferably has an electrically controlled slide rack, and into the annular table top outside the display there may be fitted a control panel for selecting a desired slide from the rack.

Furthermore, an adjustable plate for an overhead projector can be mounted on or fitted into the annular table top. The control panel referred to can be positioned adjacent the plate for the overhead projector. The position at the table adjacent the overhead projector having said control panel is the position of the instructor, the pupils being distributed around the remainder of the table.

Further features and advantages of the present invention will be apparent from the the following description of a suitable embodiment of the tuition table according to the invention.

Fig. 1 is a perspective view of the tuition table according to the invention.

Fig. 2 is a vertical sectional view centrally through the table of Fig. 1.

As shown in the drawing the tuition table according to the invention consists of a circular table top 1 having a central display 2 and a surrounding annular table top portion 3. The table top 1 is carried by a central pedestal 4 in the form of an upended hollow drum having at its base an enlargement 5 serving as a foot rest. The display 2 comprises a glass plate 6 which lends itself to writing with a suitable pen and a subjacent cloth 7 forming a screen for a picture projected by means of a projector 8 which is indicated in broken lines only. The glass plate 6 and the cloth 7 are mounted in a carrier ring 9 which is rotatably mounted relatively to the pedestal 4 and the overhanging portion 3 of the table top. The rotatable mounting is not shown in detail since it may be designed in a conventional manner by means of antifriction linings, ball bearings or the like, making it easy to rotate the carrier ring 9 in the table top. The object of rotating the display 2 is to allow everything that is written on the plate, to be rotated into positions where it can be read by all pupils around the table. To allow also any projected picture to be shown in a suitable position for all pupils, even the slide projector 8 is rotatably mounted. The projector may for instance be supported on a disk 10 suspended in the carrier ring 9 through bars 11, as shown. To stabilize the rotatable structure including the glass plate 6, the carrier ring 9 and the supporting disk 10, an indentation 12 on the lower side of the supporting disk 10 may engage a corresponding protrusion 13 on the upper side of the pedestal bottom 14. In the frame formed by the disk 10 and the bars 11 there is mounted a mirror 15 reflecting the light beams from the horizontally positioned projector 8 and directing the beams towards the cloth 7. Because of static electrisity the cloth 7 will closely adhere to the lower side of the glass plate 6.

Within the pedestal 4 there is provided hatches or doors (not shown) providing access to the slide projector 8. On account of the electric cords supplying current to the projector 8, the carrier ring 9 and the glass plate 6 can preferably be rotated not more than somewhat less that $360^{\circ}$.

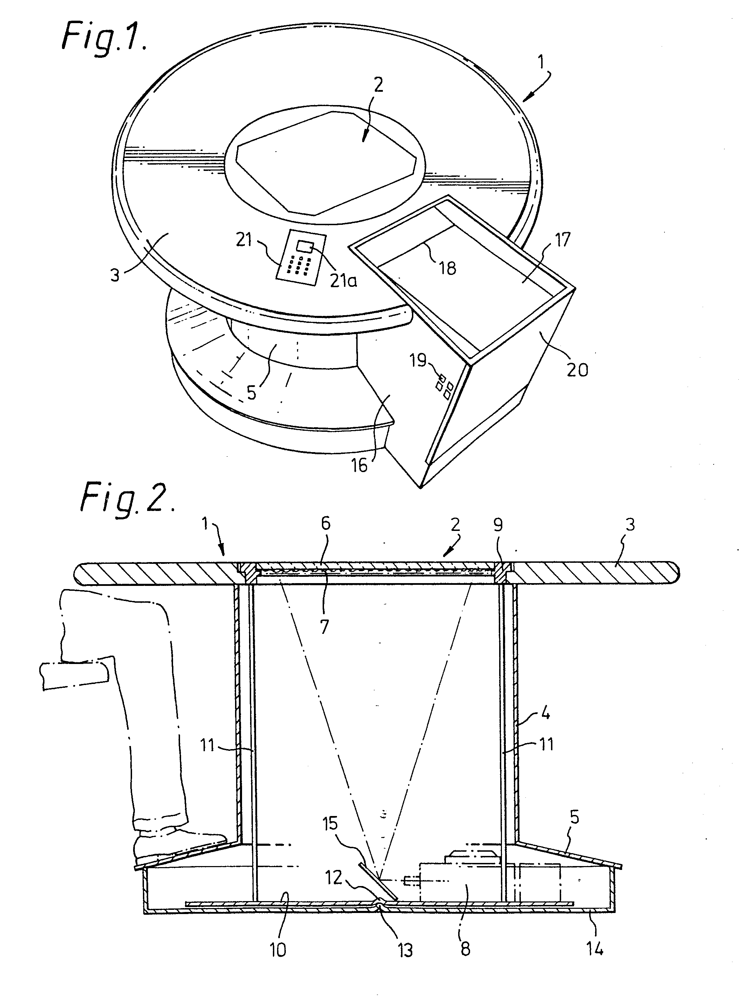

As shown in Fig. 1 a cabinet 16 having an adjustable plate 17 is fitted into the table top 1. The plate 17 can be tilted about an hinge axis by means of a drive mechanism (not shown) provided in the cabinet 16 and driven by an electric motor. The drive mechanism can be operated by means of a control pannel 19 on the side wall of the cabinet 16. The plate 17 serves to carry an overhead projector which is not illustrated in the drawing, and which may be of a conventional design. Access to the interior of the cabinet 16 may preferably be had through a door 20, and if the mechanism operating the plate 17 is positioned at the inner end of the cabinet, the outer portion may serve as a storing cabinet for tuition material, especially transparents for the overhead projector and slides for the slide projector 8.

Adjacent the position at which the cabinet 16 and the plate 17 are fitted into the annular table top portion 3, there is provided a control panel 21 for controlling the slide rack of the slide projector. Any slide in the rack may be selected and displayed on the screen 7 by means of buttons on the control panel 21, which also has a display 21a indicating the picture shown on the screen.

It should be evident that the position at the control panel 21 adjacent the overhead projector is the place of the instructor at the table.

# BARDEHLE, PAGENBERG, DOST, ALTENBURG & PARTNER

0111915

RECHTSANWÄLTE
JOCHEN PAGENBERG DR. JUR., LL. M. HARVARD··
BERNHARD FROHWITTER DIPL.-ING·
GÜNTER FRHR. v. GRAVENREUTH DIPL.-ING. (FH)·

PATENTANWÄLTE – EUROPEAN PATENT ATTORNEYS
HEINZ BARDEHLE DIPL.-ING
WOLFGANG A. DOST DR. DIPL.-CHEM
UDO W. ALTENBURG DIPL.-PHYS

POSTFACH 860620, 8000 MÜNCHEN 86
TELEFON (089) 980361
TELEX 522791 pad d
CABLE: PADBÜRO MÜNCHEN
BÜRO: GALILEIPLATZ 1, 8 MÜNCHEN 80

DATUM December 16, 1983
O 5073-EP    A1/lu

C L A I M S

1. Tuition table for small groups of pupils and an instructor, c h a r a c t e r i z e d  i n  that it comprises a table top (1) having a central display (2) and a surrounding work area (3) which is no larger than to allow all persons around the table easily to reach the central display (2).

2. Table according to claim 1, characterized in that the table top (1) has a circular or polygonal outline in planar view.

3. Table according to claim 1 or 2, characterized in that the table top (1) is supported by a central pedestal (4) in the form of an upended hollow drum having approximately the same diameter as the central display (2).

4. Table according to claim 3, characterized in that the drum-shaped pedestal (4) is enlarged at its base to provide a foot rest (5) surrounding the pedestal.

5. Table according to claim 3 or 4, characterized in that the display (2) comprises a glass plate (6) which lends itself to writing with a suitable pen, and a subjacent cloth (7) forming a screen for a slide projector (8) provided inside the pedestal (4).

6. Table according to claim 5, characterized in that the glass plate (6) and the cloth (7) are mounted in a carrier ring (9) which is rotatably mounted relatively to the pedestal (4) and the overhanging portion (3) of the table top and which carries a frame (10, 11) supporting the projector (8).

7. Table according to claim 5 or 6, characterized in that the projector (8) has a slide rack, and that a control panel (21) for selecting a desired slide from the rack is fitted into the work area (3) surrounding the display (2).

8. Table according to any of the preceding claims, characterized in that an adjustable plate (17) for an overhead projector is mounted on or fitted into the work area (3).

9. Table according to claims 7 and 8, characterized in that the control panel (21) is positioned adjacent the plate (17) for the overhead projector.

10. Table according to claim 8 or 9, characterized in that the plate (17) for the overhead projector has a cabinet (16) for storing tuition material, especially transparents for the overhead projector and slides for the slide projector.

11. Table according to claim 10, characterized in that a control panel (19) for controlling the position of the projector plate (17) is fitted into the cabinet (16).

0111915

1/1

Fig.1.

Fig.2.